# FASCICULE DE BREVET EUROPEEN

(11) **EP 2 683 664 B1**
(45) Date de publication et mention de la délivrance du brevet: **06.05.2015**
(21) Numéro de dépôt: 12707620.6
(22) Date de dépôt: 09.03.2012
(51) Int. Cl.: C03B 9/32, C03B 9/335, C03B 9/36, C03B 9/46, C03B 9/34, C03B 9/42

(54) **PROCÉDÉ ET INSTALLATION DE FABRICATION D'UN ARTICLE CREUX EN VERRE DE FAIBLE ÉPAISSEUR**
PROCÉDÉ ET INSTALLATION DE FABRICATION DE VERRE CREUX DE FAIBLE ÉPAISSEUR
VERFAHREN UND VORRICHTUNG ZUR HERSTELLUNG VON DÜNNEN HOHLEN GLASWAREN

(30) Priorité: 10.03.2011 FR 1151962
(43) Date de publication de la demande: 15.01.2014
(73) Titulaire: Pochet du Courval, 75010 Paris (FR)
(72) Inventeur: BRUNEAU, Antoine, F-76260 Eu (FR); CASTEX, Nicolas, F-92600 Asnières-sur-Seine (FR); CAVALLUCCI, Denis, F-67700 Otterswiller (FR); LEGASTELOIS, Sylvie, 92600 ASNIERES SUR SEINE (FR); PERRIN, Olivier, 92320 CHATILLON (FR)
(74) Mandataire: Blot, Philippe Robert Emile
(86) Numéro de dépôt international: PCT/EP2012/054127
(87) Numéro de publication internationale: WO 2012/120119

(56) Documents cités:
- GB-A- 2 436 104
- JP-A- 2004 018 306
- JP-A- 2004 238 242
- US-A- 4 781 955
- US-A- 5 876 478

## Description

La présente invention concerne un procédé et une installation de fabrication d'un article creux en verre de faible épaisseur, comme par exemple des flacons ou tout autre article de ce type.

D'une manière générale, la fabrication d'articles creux en verre, comme par exemple les flacons, doivent répondre à des contraintes diverses, et notamment à des contraintes de forme, par exemple la position du col, des contraintes d'outillages de fabrication, par exemple pour le démoulage, des contraintes de répartition du verre et du poids du verre et des contraintes spécifiques liées au conditionnement.

Un procédé connu de fabrication de ce type d'articles consiste à introduire dans un moule ébaucheur au moins une paraison de verre fondu à une température déterminée et à préformer dans le moule ébaucheur l'article à partir de la dite au moins paraison en injectant dans le moule ébaucheur un gaz sous pression comme par exemple de l'air.

L'ébauche de l'article ainsi réalisée est transférée dans un moule finisseur et l'article est définitivement formé dans ce moule finisseur en injectant également un gaz sous pression.

Les articles creux en verre et plus particulièrement les flacons destinés à la parfumerie et à la cosmétique sont réalisés jusqu'à présent avec des répartitions de verre épaisses ce qui est considéré comme très qualitatif et contribue à véhiculer une image de luxe. Mais, la tendance est de réaliser des articles creux en verre avec des parois de verre quasi invisibles afin de véhiculer une image de légèreté, de raffinement, d'élégance et de fragilité apparente.

Pour obtenir ce rendu sur un article creux en verre qui soit industrialisable, plusieurs conditions doivent être réunies, à savoir :
- des épaisseurs de verre très fines,
- des répartitions de verre les plus régulières possibles pour ne pas perturber la perception de l'oeil, et
- un résistance mécanique suffisante pour la manipulation de l'article.

Avec le procédé précité, le réglage du moule ébaucheur et la géométrie de l'ébauche permettent d'obtenir des parois en verre d'épaisseur fine et régulière, mais il subsiste un excédent de verre au fond de l'article, centré sur l'axe dudit article.

Cet excédent forme à l'intérieur de l'article une surépaisseur bombée dénommée par les spécialistes «marloquette» ou « chapeau de gendarme ». Cette surépaisseur perturbe la régularité de la répartition du verre.

De plus, compte tenu de la faible épaisseur des parois de l'article, les contraintes de répartition du verre imposent une cadence de fabrication beaucoup plus élevée que celles actuellement pratiquées pour des articles ayant des parois d'épaisseur plus importante. Une interface gazeuse se forme entre l'ébauche et les parois du moule finisseur et se retrouve emprisonnée lors de la phase de soufflage. Cette interface ne peut s'évacuer en raison d'un lapse de temps très faible provoquant ainsi une déformation des faces principales de l'article.

Selon son abrégé, US 4,781,955 décrit une méthode et un dispositif pour produire un article creux en verre.

Selon son abrégé, US 5,876,478 décrit un moule en métal pour produire des articles creux en verre.

Les documents GB 2 436 104, JP 2004 238242 et JP 2004 018306 sont mentionnés au titre de l'arrière-plan technologique de l'invention.

L'invention a pour but de proposer un procédé et une installation de fabrication d'un article creux en verre de faible épaisseur qui évitent ces inconvénients.

L'invention a donc pour objet un procédé de fabrication selon la revendication 1. Selon d'autres caractéristiques de l'invention :
- au cours du formage de l'article dans le moule finisseur, on canalise vers l'extérieur de ce moule finisseur, le gaz se formant entres les faces principales des parois de l'article et les parois internes dudit moule finisseur, et
- on élimine le bombé extérieur du fond de l'article par au moins une opération de taille suivie d'au moins une opération de polissage de la face extérieure du fond de l'article.

L'invention a également pour objet une installation de fabrication selon la revendication 4.

Selon d'autres caractéristiques de l'invention :
- le moule finisseur comporte au moins un évent pour canaliser vers l'extérieur dudit moule le gaz se formant entre les faces principales des parois de l'article et les parois internes du moule finisseur, et
- l'installation comporte des moyens de taille du bombé extérieur du fond et des moyens de polissage de la face extérieure du fond de l'article.

On décrit aussi un objet un article creux en verre comportant des parois et un fond de faible épaisseur, obtenu par le procédé précédemment défini, caractérisé en ce que les parois latérales ont une épaisseur comprise entre 0,5 et 3 mm et de préférence de l'ordre de 1mm et le fond a une épaisseur comprise entre 1,5 et 4 mm.

Les caractéristiques et avantages de l'invention apparaîtront au cours de la description qui va suivre, donnée à titre d'exemple et faite en référence aux dessins annexés, sur lesquels :
- la Fig. 1 est une vue schématique d'une partie d'une installation de fabrication d'un article creux en verre de faible épaisseur, conforme à l'invention.
- les Figs. 2 à 6 sont des vues schématiques en coupe verticale respectivement du moule ébaucheur et du moule finisseur de l'installation, conforme à l'invention,
- la Fig. 7 est une vue schématique d'un article creux en verre obtenu après l'étape de formage dans le moule finisseur, et
- la Fig.8 est une vue schématique en perspective de l'article creux en verre définitif.

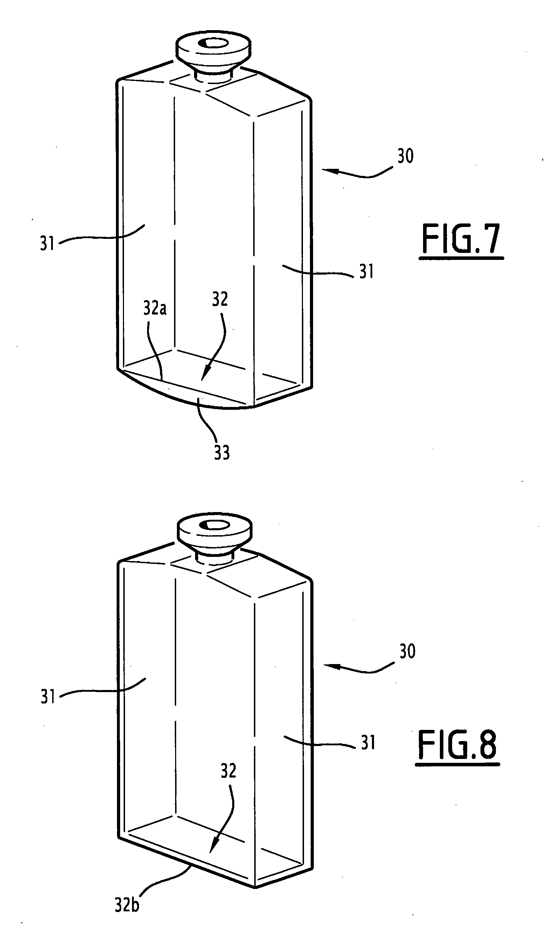

Dans ce qui suit, l'installation pour la mise en oeuvre du procédé selon l'invention sera décrite pour la fabrication d'un article 30 creux en verre, par exemple un flacon de forme générale parallélépipédique comportant des parois latérales 31 et un fond 32 de faible épaisseur, comme montré à la Fig. 8. Les parois latérales 31 ont une épaisseur comprise entre 0,5 et 3 mm et de préférence de l'ordre de 1 mm et le fond 32 a une épaisseur comprise entre 1,5 et 4 mm.

Bien évidemment, cette installation permet également la fabrication d'articles creux de formes diverses et de faible épaisseur.

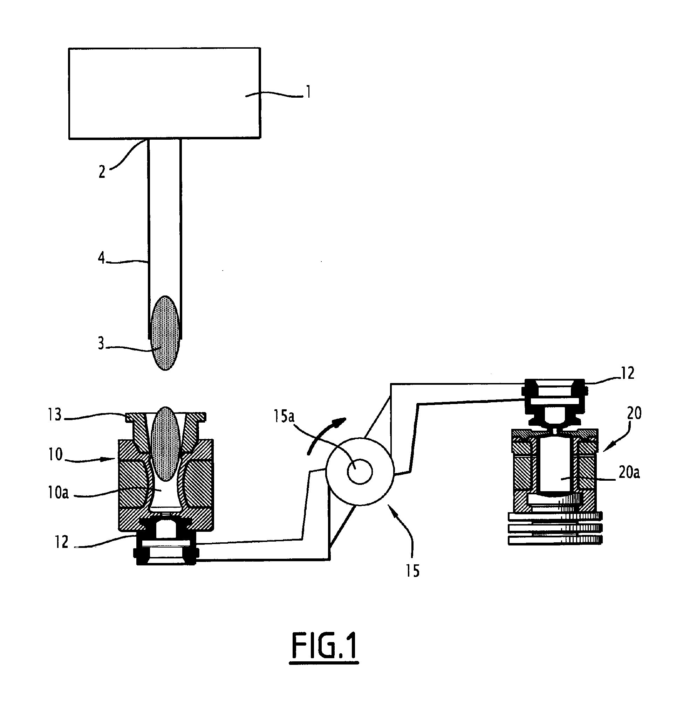

Ainsi que représenté à la Fig. 1, l'installation comporte un distributeur 1 de verre fondu placé entre un four, non représenté, et un moule ébaucheur désigné dans son ensemble par la référence 10.

Le distributeur 1 de type connu, délivre à la sortie d'un orifice de coulée 2, une paraison 3 qui, de manière classique, est coupée par des ciseaux, non représentés.

A la sortie du distributeur 1, la paraison 3 tombe dans un conduit 4 qui la conduit dans le moule ébaucheur 10 comportant une empreinte 10a pour former une ébauche 5. A cet effet, l'empreinte 10a du moule ébaucheur 10 comporte au niveau de son entrée, un entonnoir 13.

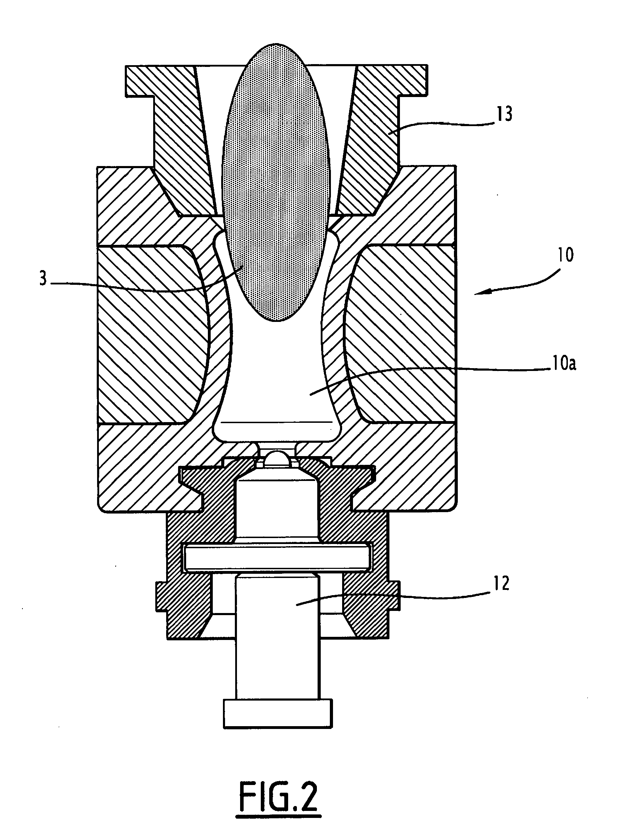

Ainsi que montré schématiquement à la Fig. 2, le moule ébaucheur 10 comporte, à sa partie inférieure, une buse de soufflage 12 reliée à un dispositif d'alimentation en gaz sous pression, comme par exemple de l'air, non représenté.

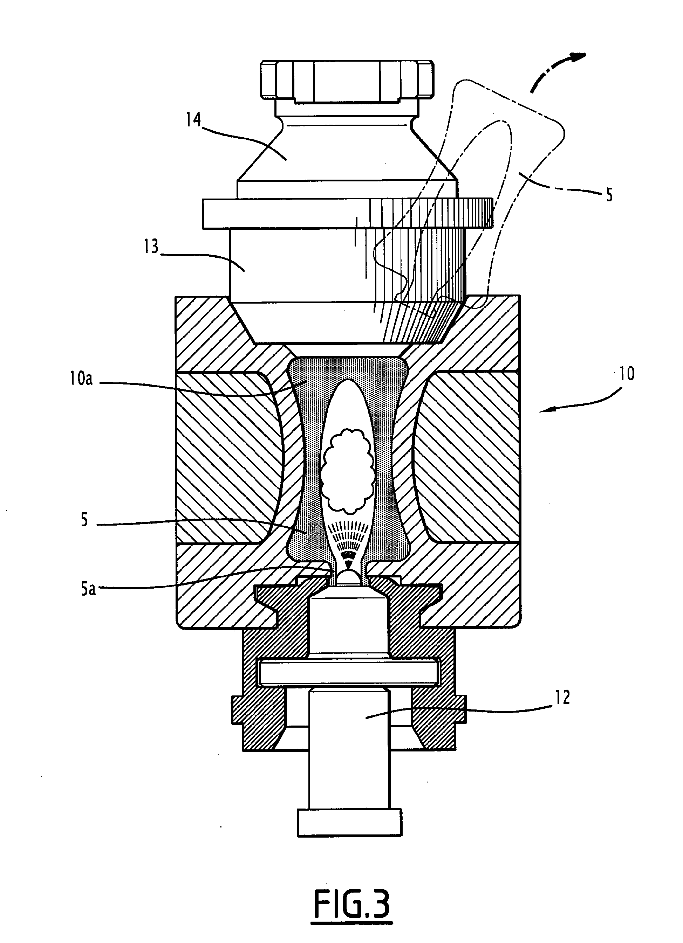

Une fois la paraison 3 introduite dans l'empreinte 10a du moule ébaucheur 10, on place, sur l'ouverture supérieure dudit moule ébaucheur, un fond 14 sur l'entonnoir 13 et on injecte l'air sous pression par la buse de soufflage 12 pour tasser le verre et former sur l'ébauche 5 une bague 5a, comme représenté à la Fig. 3. Le fond 14 est ensuite relevé pour permettre de retirer l'entonnoir 13. Ce fond 14 est positionné sur le dessus du moule ébaucheur 10 permettant de façonner le fond de l'ébauche 5 et de l'air sous pression est soufflé par la buse 12.

Ainsi, on obtient l'ébauche 5 de l'article 30.

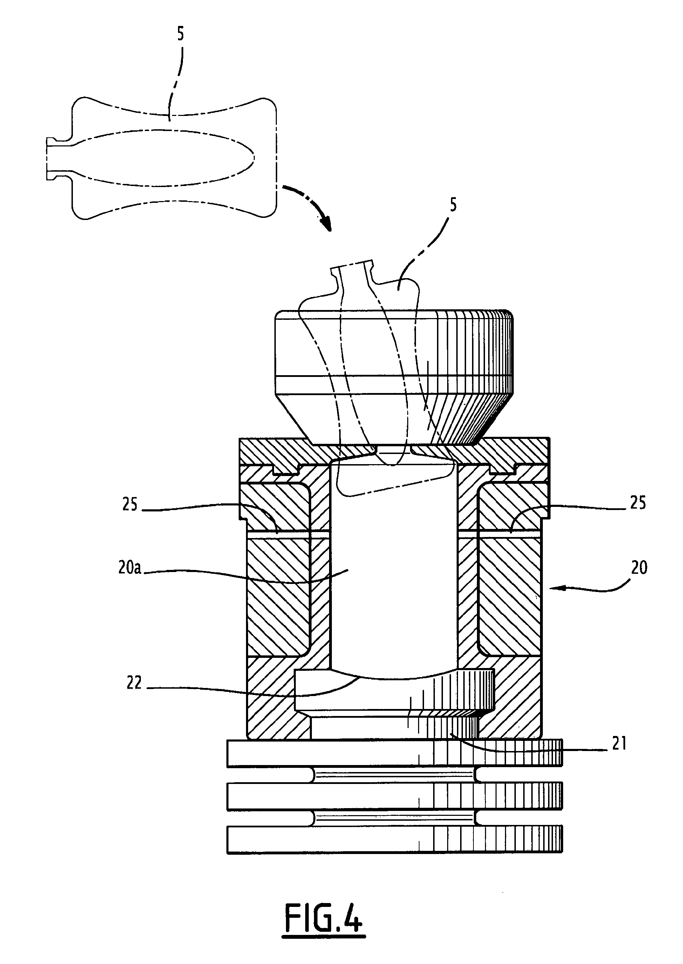

Ensuite, l'ébauche 5 est démoulée et transférée par un bras manipulateur 15 (Fig. 1) pivotant autour d'un axe 15a, dans un moule finisseur 20 représenté schématiquement sur les Fig. 4 à 6. Ce moule finisseur 20 comporte une empreinte 20a dont la partie inférieure est obturée par un fond amovible 21. Ce fond amovible 21 permet de façonner le fond 32 de l'article 30 à obtenir.

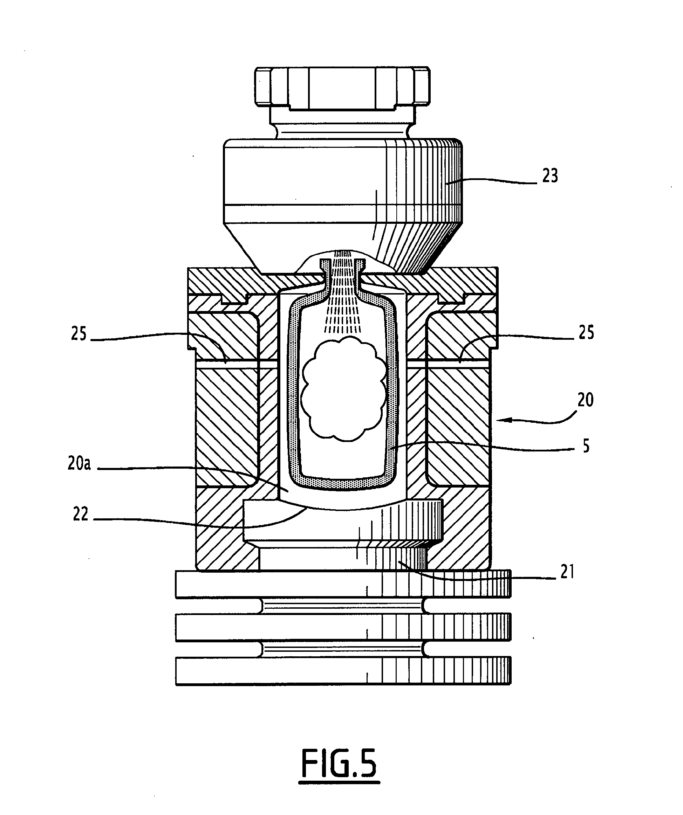

Comme cela apparaît sur les Figs. 4 à 6, le fond 21 de l'empreinte 20a comporte une cavité 22 concave. Lorsque l'ébauche 5 a été introduite dans le moule finisseur 20 (Fig 5), on monte sur la partie supérieure du moule finisseur 20, une buse de soufflage 23 qui est reliée à un dispositif d'alimentation en gaz sous pression, comme par exemple de l'air, non représenté.

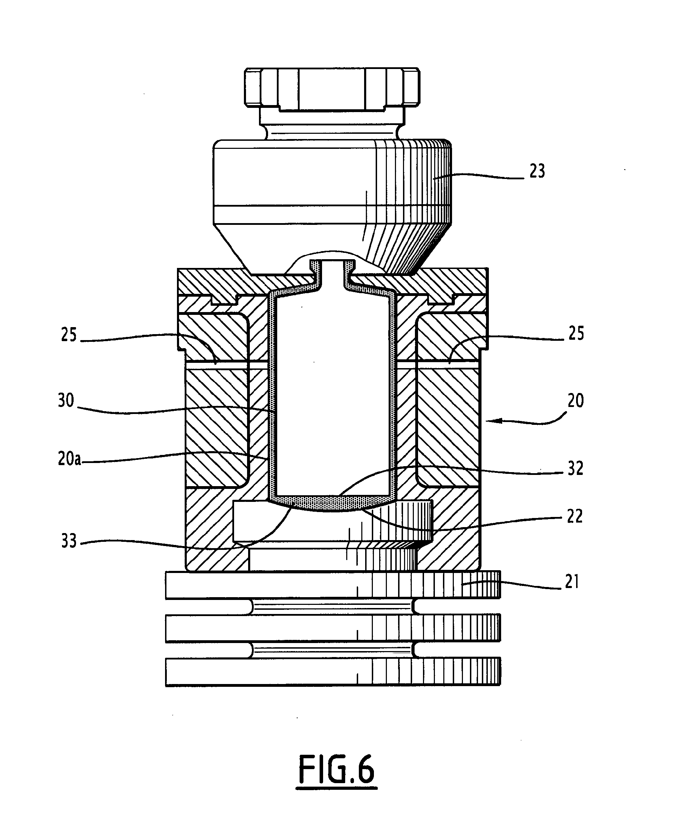

Après cette opération, on souffle dans l'ébauche 5, du gaz sous pression de façon à former l'article 30 (Fig. 6).

Au cours du formage de cet article 30 dans le moule finisseur 20, l'excédent de verre vient se loger dans la cavité 22 ménagée dans le fond 21 de ce moule finisseur 20 en formant vers l'extérieur du fond de l'article 30, un bombé convexe 33, comme représenté à la Fig. 7. Ainsi, la répartition intérieure du fond 32 de l'article 30 s'affaisse dans la cavité 22 et la face intérieure 32a de fond 32 devient horizontale.

L'article 30 obtenu dans le moule finisseur 20 est représenté à la Fig. 7 et est démoulé de ce moule finisseur 20 en retirant le fond amovible 21.

Ensuite, pour éliminer le bombé extérieur 33 ainsi formé, les opérateurs effectuent au moins une opération de taille suivie d'au moins une opération de polissage de la face extérieure 32b du fond 32 de l'article 30 afin d'obtenir un fond 32 d'une épaisseur sensiblement constante, ainsi que montré à la Fig. 8.

Lors de l'opération de formage dans le moule finisseur 20, pour permettre au matelas gazeux qui se forme entre les faces principales de l'ébauche 5 et les parois internes de l'empreinte 20a de ce moule finisseur 20, ledit moule finisseur 20 comporte au moins un évent désigné par la référence 25 sur les figures 4 à 6.

Dans l'exemple de réalisation représenté sur ces figures, chaque évent 25 est formé par un conduit ménagé dans les parois du moule finisseur 20. Chaque évent 25 comporte intérieurement un élément permettant au gaz de s'échapper, tout en évitant que le verre fondu s'écoule par cet évent. Chaque évent 25 peut être constitué par tout autre aménagement dans le moule finisseur 20.

Des traitements chimiques à chaud et à froid peuvent être effectués sur l'article 30 de façon à renforcer la surface extérieure du verre.

Le procédé selon l'invention permet de pouvoir obtenir des articles creux en verre de faible épaisseur ayant une répartition homogène du verre et présentant la solidité requise pour ce type d'article malgré la faible épaisseur des parois latérales et du fond.

## Revendications

1. Procédé de fabrication d'un article creux (30) en verre comportant des parois (31) et un fond (32) de faible épaisseur, procédé dans lequel :
- on introduit dans un moule ébaucheur (10) au moins une paraison (3) de verre fondu,
- on forme dans le moule ébaucheur (10) une ébauche (5) de l'article (30) à partir de ladite au moins paraison (3),
- on transfère l'ébauche (5) de l'article (30) dans un moule finisseur (20),
- on forme dans le moule finisseur (20) l'article (30),
**caractérisé en ce que**, au cours du formage de l'article (30) dans le moule finisseur (20), on dirige un excédent de verre vers l'extérieur du fond (32) de l'article (30) pour former un bombé (31) convexe et on élimine ce bombé (31) pour obtenir le fond (32) de l'article (30) à une épaisseur sensiblement constante.

2. Procédé selon la revendication 1, **caractérisé en ce que**, au cours du formage de l'article (30) dans le moule finisseur (20), on canalise vers l'extérieur de ce moule finisseur (20) le gaz se formant entre les faces principales des parois (31) de l'article (30) et les parois internes du moule finisseur (20).

3. Procédé selon la revendication 1 ou 2, **caractérisé en ce que** l'on élimine le bombé (31) extérieur du fond de l'article (30) par au moins une opération de taille suivie d'au moins une opération de polissage de la face extérieure (32b) du fond (32) de l'article (30).

4. Installation de fabrication d'un article (30) creux en verre comportant des parois (31) et un fond (32) de faible épaisseur, ladite installation comprenant :
- au moins un distributeur (1) de paraisons (3) de verre fondu,
- un moule ébaucheur (10) comportant une empreinte (10a) destinée à recevoir successivement au moins une paraison (3) de verre fondu,
- des moyens de formation dans le moule ébaucheur (10) d'une ébauche (5) dudit article (30),
- des moyens (15) de transfert de l'ébauche (5) dans une empreinte (20a) d'un moule finisseur (20),
- des moyens de formation dans le moule finisseur (20) de l'article (30),
**caractérisée en ce que** l'empreinte (20a) du moule finisseur (20) comporte un fond (21) muni d'une cavité (22) concave pour former sur le fond (32) de l'article (30) un bombé (31) convexe dirigé vers l'extérieur dudit article (30) et **en ce que** l'installation comprend des moyens d'élimination du bombé (31) pour obtenir le fond (32) de l'article (30) à une épaisseur sensiblement constante.

5. installation selon la revendication 4, **caractérisée en ce que** le moule finisseur (20) comporte au moins un évent (25) pour canaliser vers l'extérieur dudit moule finisseur (20) le gaz se formant entre les faces principales des parois (31) de l'article (30) et les parois internes dudit moule finisseur (20).

6. Installation selon la revendication 4 ou 5, **caractérisée en ce qu'**elle comporte des moyens de taille du bombé (31) extérieur du fond (32) de l'article (30) et des moyens de polissage de la face extérieure (32b) du fond (32) dudit article (30).

## Patentansprüche

1. Verfahren zur Herstellung eines hohlen Gegenstands (30) aus Glas, der Wände (31) und einen Boden (32) geringer Dicke aufweist, wobei in dem Verfahren:
- in eine Vorform (10) mindestens ein Schmelzglasposten (3) eingebracht wird,
- in der Vorform (10) ein Rohling (5) des Gegenstands (30) aus dem mindestens einen Posten (3) ausgebildet wird,
- der Rohling (5) des Gegenstands (30) in eine Endform (20) übertragen wird,
- der Gegenstand (30) in der Endform (20) ausgebildet wird,
**dadurch gekennzeichnet, dass** im Verlauf des Ausbildens des Gegenstands (30) in der Endform (20) ein Glasüberschuss zum Äußeren des Bodens (32) des Gegenstands (30) gelenkt wird, um eine konvexe Wölbung (31) zu bilden, und diese Wölbung (31) entfernt wird, um den Boden (32) des Gegenstands (30) in einer im Wesentlichen konstanten Dicke zu erhalten.

2. Verfahren nach Anspruch 1, **dadurch gekennzeichnet, dass** im Verlauf des Ausbildens des Gegenstands (30) in der Endform (20) das Gas, das sich zwischen den Hauptflächen der Wände (31) des Gegenstands (30) und den Innenwänden der Endform (20) bildet, zum Äußeren dieser Endform (20) geleitet wird.

3. Verfahren nach Anspruch 1 oder 2, **dadurch gekennzeichnet, dass** die äußere Wölbung (31) des Bodens des Gegenstands (30) durch mindestens einen Abschneidevorgang entfernt wird, auf den mindestens ein Poliervorgang der Außenfläche (32b) des Bodens (32) des Gegenstands (30) folgt.

4. Anlage zur Herstellung eines hohlen Gegenstands (30) aus Glas, der Wände (31) und einen Boden (32) geringer Dicke aufweist, wobei die Anlage aufweist:
- mindestens einen Verteiler (1) von Schmelzglasposten (3),
- eine Vorform (10), die einen Formhohlraum (10a) aufweist, der dazu bestimmt ist, sukzessive mindestens einen Schmelzglasposten (3) aufzunehmen,
- in der Vorform (10), Ausbildungseinrichtungen für einen Rohling (5) des Gegenstands (30),
- Einrichtungen (15) zum Übertragen des Rohlings (5) in einen Formhohlraum (20a) einer Endform (20),
- in der Endform (20), Ausbildungseinrichtungen für den Gegenstand (30),
**dadurch gekennzeichnet, dass** der Formhohlraum (20a) der Endform (29) einen Boden (21) aufweist, der mit einem konkaven Hohlraum (22) ausgestattet ist, um am Boden (32) des Gegenstands (30) eine konvexe Wölbung (31) zu bilden, die zum Äußeren des Gegenstands (30) gerichtet ist, und dass die Anlage Einrichtungen zum Entfernen der Wölbung (31) aufweist, um den Boden (32) des Gegenstands (30) in einer im Wesentlichen konstanten Dicke zu erhalten.

5. Anlage nach Anspruch 4, **dadurch gekennzeichnet, dass** die Endform (20) mindestens einen Luftabzug (25) aufweist, um das Gas, das sich zwischen den Hauptflächen der Wände (31) des Gegenstands (30) und den Innenwänden der Endform (20) bildet, zum Äußeren dieser Endform (20) zu leiten.

6. Anlage nach Anspruch 4 oder 5, **dadurch gekennzeichnet, dass** sie Einrichtungen zum Abschneiden der äußeren Wölbung (31) des Bodens (32) des Gegenstands (30) und Einrichtungen zum Polieren der Außenfläche (32b) des Bodens (32) des Gegenstands (30) aufweist.

## Claims

1. A method for manufacturing a hollow glass item (30) having thin walls (31) and a thin bottom (32), said method comprising:
- feeding at least one molten-glass parison (3) into a parison mold (10),
- forming, in the parison mold (10), a blank (5) of the item (30) from said at least one parison (3),
- transferring the blank (5) of the item (30) into a finishing mold (20),
- forming the item (30) in the finishing mold (20),
**characterized in that**, while forming the item (30) in the finishing mold (20), excess glass is directed out of the bottom (32) of the item (30) so as to form a convex bulge (31), and the bulge (31) is removed such that the thickness of the bottom (32) of the item (30) is substantially constant.

2. The method according to claim 1, **characterized in that**, during forming of the item (30) in the finishing mold (20), the gas forming between the main faces of the walls (31) of the item (30) and the inner walls of said finishing mold (20) is channeled toward the outside of said finishing mold (20).

3. The method according to claim 1 or 2, **characterized in that** the outer bulge (31) is eliminated from the bottom of the item (30) by at least one cutting operation followed by at least one polishing operation of the outer face (32b) of the bottom (32) of the item (30).

4. Equipment for manufacturing a hollow glass item (30) including thin walls (31) and a thin bottom (32), said equipment comprising:
- at least one distributor (1) of molten glass parisons (3),
- a parison mold (10) including a cavity (10a) intended to successively receive at least one molten glass parison (3),
- means for forming a blank (5) of said item (30) in the parison mold (10),
- means (15) for transferring the blank (5) into a cavity (20a) of a finishing mold (20),
- means for forming the item (30) in the finishing mold (20),
**characterized in that** the cavity (20a) of the finishing mold (20) includes a bottom (21) provided with a concave hollow (22) for forming on the bottom (32) of the item (30) a convex bulge (31) oriented toward the outside of said item (30), and **in that** the equipment comprises means for eliminating the bulge (31) to obtain the bottom (32) of the item (30) with a substantially constant thickness.

5. The equipment according to claim 4, **characterized in that** the finishing mold (20) includes at least one vent (25) for channeling the gas forming between the main faces of the walls (31) of the item (30) and the inner walls of the finishing mold (20) toward the outside of said finishing mold (20).

6. The equipment according to claim 4 or 5, **characterized in that** it includes means for cutting the outer bulge (31) of the bottom (32) of the item (30) and means for polishing the outer face (32b) of the bottom (32) of said item (30).
